# EUROPÄISCHE PATENTSCHRIFT

(11) **EP 1 243 078 B1**
(45) Veröffentlichungstag und Bekanntmachung des Hinweises auf die Patenterteilung: **20.08.2003**
(21) Anmeldenummer: 00991127.2
(22) Anmeldetag: 28.12.2000
(51) Int. Cl.: H04B 1/38

(54) **ELEKTRISCHES GERÄT MIT EINEM GEHÄUSE**
ELECTRICAL DEVICE COMPRISING A HOUSING
APPAREIL ELECTRIQUE POURVU D'UN BOITIER

(30) Priorität: 31.12.1999 DE 19963975
(43) Veröffentlichungstag der Anmeldung: 25.09.2002
(73) Patentinhaber: SIEMENS AKTIENGESELLSCHAFT, 80333 München (DE)
(72) Erfinder: LERCHNER, Henry, 31224 Peine (DE); CHRISTENSEN, Leif, DK-9000 Aalborg (DK)
(86) Internationale Anmeldenummer: DE0004664
(87) Internationale Veröffentlichungsnummer: WO01050617

(56) Entgegenhaltungen:
- EP-A- 0 616 458
- US-A- 5 254 988
- PATENT ABSTRACTS OF JAPAN vol. 2000, no. 02, 29. Februar 2000 (2000-02-29) -& JP 11 307191 A (HOSIDEN CORP), 5. November 1999 (1999-11-05)

## Beschreibung

Die Erfindung betrifft ein elektrisches Gerät mit einem Gehäuse und mit Befestigungsmitteln für eine lösbare Fixierung einer Karte an dem Gehäuse, wobei die Befestigungsmittel derart vorgesehen sind, dass eine elastische Auslenkung der Befestigungsmittel aus einer Ruheposition möglich ist, und zur Fixierung der Karte am Gehäuse die Befestigungsmittel zumindest zeitweise aus der Ruheposition ausgelenkt werden, wobei das elektrische Gerät einen Anschlag auf der den Befestigungsmitteln gegenüberliegenden Seite zur Befestigung der Karte umfasst, und wobei der Anschlag derart mit den Befestigungsmitteln und der Karte zusammenwirkt, dass beim Fixieren der Karte durch die Befestigungsmittel zumindest zeitweise eine von dem Anschlag aufgenommene Kraftwirkung auf die Karte ausgeübt wird.

Es sind Funktelefone, insbesondere Mobiltelefone, bekannt, bei denen eine SIM-Karte am Gehäuse des Funktelefons zur Identifizierung eines Benutzers angebracht ist. Zur Fixierung einer solchen Karte an dem Gehäuse von Funktelefonen werden in der Regel Sicherungsbauteile verwendet, damit die Karte nicht unbeabsichtigt verloren gehen kann.

In der EP 0 616 458 A1 ist im Batteriefach eines portablen Telefons zusätzlich eine schachtartige Halterung bzw. Aufnahme für eine IC-Karte vorgesehen, wobei die Karte am Boden dieses Batteriefachs plan zu liegen kommen soll. Diese Halterung ist dadurch gebildet, dass auf zwei gegenüberliegenden Seiten des Batteriefachs schlitzförmige Auskragungen bzw. Vorsprünge, d.h. Hinterschneidungsschlitze, mit paralleler Ausrichtung zum planen Halterungsboden vorgesehen sind. Die Spaltweite zwischen diesen beiden Vorsprüngen ist fest vorgegeben. Die Fixierung einer Karte wird nur dann durch diese Hinterschneidungsschlitze erreicht, wenn die Karte eine größere Abmessung als die vorgegebene Öffnungsweite der beiden Vorsprünge der Hinterschneidungsschlitze voneinander hat und kleiner als die Summe aus diesem Abstand und der doppelten Schlitztiefe ist. Nur dann wird jeweils ein stirnseitiges Ende der jeweilig eingelegten IC-Karte vor dem Herausfallen festgehalten. In einem dieser Hinterschneidungsschlitze ist eine Drahtfeder zusätzlich derart eingebracht, dass sie sich vom Boden des Batteriefachs nach oben im Wesentlichen senkrecht erstreckt. Wird die IC-Karte in den Halteschacht eingelegt, so kann sie gegen die Drahtfeder gedrückt werden, wodurch eine Federgegenkraft erzeugt und die IC-Karte unter Vorspannung zwischen den beiden Hinterschneidungsschlitzen fixiert werden kann. Eine derartige zusätzliche Druckfeder lässt sich nur umständlich in einen der Hinterschneidungsschlitze der schachtartigen Halterung montieren, da die Hinterschneidungsschlitze nicht von oben frei zugänglich sind. Auch kann sich dieses zusätzliche Federbauteil vom Halterungsschacht im praktischen Gebrauch lösen, so dass eine einwandfreie mechanische und elektrische Fixierung der IC-Karte nicht mehr möglich ist. Insbesondere wird das Einlegen der Karte dadurch erschwert, dass dazu eine ihrer Stirnseiten am Boden des Halterungsschachts schräg aufgekantet und in den Hinterschneidungsschlitz hineingedrückt werden muss, während ihre andere gegenüberliegende Stirnseite über die Oberseite des anderen Verschneidungsschlitzes hinaus schräg absteht. Eine derartige Einpassung der Karte in eine zum Halterungsboden parallele Lageebene zwischen die beiden Hinterschneidungsschlitze ist somit kritisch, da durch deren starr vorgegebenen Vorsprünge und somit durch die fest vorgegebene Öffnungsweite zwischen diesen Vorsprüngen die Gefahr besteht, dass die Karte in unzulässiger Weise abgeknickt bzw. gebogen oder sonstwie unzulässig stark mechanisch beansprucht wird, um die Karte von außen überhaupt hinter die Vorsprünge der Hinterschneidungsschlitze bringen zu können.

Das gleiche Halterungsprinzip ist auch aus der US 5,254,988 bekannt, wo eine Datenspeicherkarte ebenfalls zwischen zwei Hinterschneidungsschlitzen bzw. Vorsprüngen eines Halterungsschachtes mit Hilfe einer zusätzlichen Schraubenfeder unter Vorspannung plan am Halterungsboden festgeklemmt wird. Die Feder stützt sich dabei mit ihrer Stirnseite an einer Seitenwand des Halterungsschachts ab und erstreckt sich im Wesentlichen parallel zur Längserstreckung der jeweilig eingelegten Datenspeicherkarte. Am freien, in den Halterungsschacht hineinragenden Ende der Feder ist zum Erleichtern des Einlegevorgangs ein zusätzliches Gleitelement derart vorgesehen, dass dieses bei leerem Halterungsschacht das offene Ende dieses Hinterschneidungsschlitzes im wesentlichen bündig zu dessen Vorsprung abschließt und sich erst beim Einlegen der Datenspeicherkarte durch deren anliegende Stirnseite in axiale Richtung der Schraubenfeder zurückverschieben lässt, wodurch erst dann die Karte mit ihrer Stirnseite hinter dem Vorsprung dieses Hinterschneidungsschlitzes zu liegen kommt. Zum bündigen Abschluss des Hinterschneidungsschlitzes ist aber eine genaue Anpassung des Gleitelements und der Feder erforderlich, was in der Praxis zu kompliziert ist. Zwar ist zur Einlegeerleichterung der gegenüberliegende Hinterschneidungsschlitz stirnseitig mit einer Abschrägung 4al versehen. Trotzdem liegt dann zwischen den Vorsprüngen der beiden Hinterschneidungsschlitzen eine starr, fest vorgegebene Öffnungsweite zum Einlegen der Karte vor. Dadurch besteht weiterhin - wie bei der EP 0616 458 A1 - das Problem, die jeweilige Karte mit ihren beiden Randseitenbereichen von außen überhaupt hinter die Vorsprünge der Hinterschneidungsschlitze ohne unzulässiges Knicken oder zu starkes Verbiegen bringen zu können. Zudem ist diese bekannte Halterungskonstruktion noch aufwendiger und im praktischen Gebrauch noch anfälliger, da zwei zusätzliche bewegliche Bauteile extra vorhanden sind. Auch ist dies mit zusätzlichen Kosten verbunden.

Aus der JP 11-307191 A ist eine Halterung für eine SIM-Karte bekannt, bei der mit Hilfe eines zusätzlichen blattfederähnlichen bzw. bügelartigen Federelements eine seitliche Einspannung, d.h. laterale Einspannung an den Längsseiten der SIM-Karte bereitgestellt ist. Auch hier ist ein zusätzliches Einspannungsbauteil vorgesehen, was in der Montage aufwendig ist sowie zusätzliche Kosten verursacht.

Der Erfindung liegt die Aufgabe zu Grunde, ein elektrisches Gerät mit einer lösbaren Kartenfixierung bereitzustellen, die möglichst einfach und dennoch zuverlässig ausgebildet ist.

Diese Aufgabe wird bei einem elektrischen Gerät der eingangs genannte Art dadurch gelöst, dass die Befestigungsmittel und der Anschlag zumindest mit einem Teil des Gehäuses einstückig verbunden sind, und dass die Befestigungsmittel derart bügelförmig ausgebildet und geformt sind, dass ein erster Schenkel in den Innenraum des Gehäuses hineinragt, und dass sich an diesen ersten Schenkel ein zweiter Schenkel anschließt, dessen dem ersten Schenkel abgewandtes Ende frei in den Innenraum des Gehäuses hineinragt, und dass dieses freie Ende des zweiten Schenkels beim Einlegen der Karte durch diese elastisch verformt und aus seiner Ruheposition ausgelenkt wird, wodurch eine Rückstellkraft bewirkt ist, mit der die Karte zwischen dem zweiten ausgelenkten Schenkel und dem Anschlag fixiert ist.

Das erfindungsgemäße elektrische Gerät mit den Merkmalen des Hauptanspruchs hat also gegenüber dem genannten Stand der Technik den Vorteil, dass kein zusätzliches Bauteil verwendet wird und dass durch einfaches Einlegen und Verrasten der Karte im Gehäuse bzw. am Gehäuse eine sichere bzw. zuverlässige Fixierung derselben möglich ist. Auf diese Weise ist die einstückige erfindungsgemäße Ausbildung der Befestigungsmittel sowie des Anschlags zusammen mit dem Gehäuse gegenüber den bekannten Halterungskonstruktionen mit zusätzlich montierten Komponenten fehlerunanfälliger und spart Montageaufwand sowie Kosten.

Durch diese erfindungsgemäße zweischenkelige, bügelartige Konstruktion der Befestigungsmittel wird der zweite Schenkel automatisch im wesentlichen auf seiner gesamten Längserstreckung elastisch verformt, d.h. um jeweils einen sich selbständig einstellenden Biegewinkel ausgelenkt, wenn eine Karte zwischen dem zweiten Schenkel und dem Anschlag eingelegt wird. Anders wie bei dem bekannten, starren Halterungsprinzip mit einer zusätzlichen Schraubenfeder wie z.B. der EP 0615 458 A1 und US 5,254,988 wird hierbei nicht nur punktuell, sonder verteilt über die gesamte Länge des federelastisch ausgelenkten Schenkels in der Art eines Biegebalkens eine Rückstellkraft auf die eingelegte Karte bewirkt. Mit anderen Worten ausgedrückt heißt das, dass sich der freie, zweite Schenkel beim Einlegen der Karte kontinuierlich ausgehend von seiner Ruheposition in der Art einer beweglichen Rampe schräger stellt, bis die Karte dann im Raum zwischen dem Anschlag und dem zweiten ausgelenkten Schenkel eingepasst zu liegen kommt. Hierbei führt der Angriff einer Kraft am freien Ende der Befestigungsmittel zu einer elastischen Verformung der Befestigungsmittel und somit zu einer. Auslenkung insbesondere des zweiten Schenkels der Befestigungsmittel in der Art, dass das freie Ende der Befestigungsmittel je nach Auslenkungsgrad mehr oder weniger weit von der Wandung des Gehäuses im Bereich der Befestigungsmittel entfernt ist. Dadurch, dass der zweite Schenkel der Befestigungsmittel flexibel je nach ausgeübten Druck durch die angedrückte, einzulegende Karte vor- und/oder zurückweichen kann, wird automatisch beim Einlegevorgang soviel Platz geschaffen, dass ein unzulässiges Knicken oder Verbiegen der Karte weitgehend vermieden ist. Insbesondere wird die Spaltbreite zwischen dem zweiten Schenkel der Befestigungsmittel und dem Anschlag umso weiter, je weiter die Karte nach unten in den Zwischenraum zwischen den Befestigungsmitteln und dem Anschlag gedrückt wird, da der zweite Schenkel auf sein freies Ende zu umso weiter ausschwenkbar ist. Gleichzeitig wird die Rückstellkraft aufgrund der elastischen Biegebalkenwirkung des zweiten Schenkels auf dessen freies Ende zu umso großer, so dass für eine dorthin gedrückte Karte eine zuverlässige Fixierung bewirkt ist. Die Spaltweite zwischen den Befestigungsmitteln und dem Anschlag stellt sich beim Einlegevorgang also selbständig ein. Auch lassen sich dadurch Karten mit Fehlertoleranzen bezüglich ihrer Längsabmessungen in einfacher und zuverlässiger Weise in die erfindungsgemäße Kartenfixierung einpassen. Allgemein ausgedrückt lassen sich also in gewissen Grenzen auch unterschiedlich lange Karten zwischen den Befestigungsmitteln und dem Anschlag einklemmen, ohne dass eine Umdimensionierung des Zwischenraums zwischen den Befestigungsmitteln und dem Anschlag nötig wäre.

Somit kann die Karte besonders leicht am elektrischen Gerät fixiert werden, da die Karte auch während des Vorgangs der Fixierung der Karte durch die Befestigungsmittel und den Anschlag gehalten bzw. geführt wird.

Insbesondere ist von Vorteil, dass die Befestigungsmittel und der Anschlag zumindest mit einem Teil des Gehäuses einstückig verbunden sind. Hierdurch wird auf einfache Weise ermöglicht, die Karte ohne zusätzliche Bauteile am Gehäuse sicher zu fixieren.

Gemäß einer Weiterbildung der Erfindung umfassen die Befestigungsmittel eine erste Sicherungsfläche und der Anschlag eine zweite Sicherungsfläche, wobei die Sicherungsflächen die Karte am Gehäuse fixieren. Dadurch wird eine besonders 'einfache und sichere Anbringung der Karte am elektrischen Gerät ermöglicht.

Gemäß einer zweckmäßigen Weiterbildung der Erfindung sind die Befestigungsmittel bei am Gehäuse befestigter Karte aus der Ruheposition ausgelenkt. In diesem Fall ergibt sich durch die Auslenkung eine Rückstellkraft der Befestigungsmittel, wodurch eine zusätzliche Sicherungsfunktion gegen eine Lösung der Karte vom elektrischen Gerät bewirkt wird.

Gemäß einer weiteren zweckmäßigen Weiterbildung der Erfindung werden die Befestigungsmittel beim Lösen der Fixierung der Karte zumindest zeitweise aus ihrer Position bei am Gehäuse fixierter Karte ausgelenkt. Hierdurch ist zum Lösen der Karte gegen die Rückstellkraft der Befestigungsmittel eine Arbeit zu verrichten, so dass eine Lösung der Fixierung der Karte vom Gehäuse des elektrischen Gerätes nur absichtsvoll geschehen kann.

Eine weitere zweckmäßige Weiterbildung ist, dass im Bereich des Anschlags Mittel zum Lösen der Karte vorgesehen sind, wobei die Mittel zum Lösen der Karte geeignet sind, durch eine Verschiebung der Karte eine Auslenkung der Befestigungsmittel und eine Aufhebung der Fixierung der Karte bezüglich der zweiten Sicherungsfläche zu bewirken. Dadurch kann die Karte mit einfachen Mitteln und insbesondere ohne Werkzeuge vom elektrischen Gerät gelöst werden.

Weiterhin ist insbesondere von Vorteil, dass die Mittel zum Lösen in Form einer Ausnehmung im Bereich des Anschlags vorgesehen sind. Dadurch ist sogar ein Entfernen der Karte vom elektrischen Gerät mittels eines einzigen Fingers möglich.

Weiterhin ist es vorteilhaft, dass die Karte eine Identifikationskarte, insbesondere eine SIM-Karte, ist. Dadurch kann eine Identifikationskarte leicht und sicher am elektrischen Gerät angebracht werden. Eine solche Karte ist auch leicht lösbar, so dass ein Benutzer, dessen Identität die Karte repräsentiert, mehrere elektrische Geräte benutzen kann, indem er die Karte zunächst an einem ersten elektrischen Gerät und dann an einem zweiten elektrischen Gerät befestigt.

### Zeichnung

Eine Ausführungsbeispiel der Erfindung ist in der Zeichnung dargestellt und in der nachfolgenden Beschreibung näher erläutert. Es zeigen:
- Figur 1: eine perspektivische Darstellung hauptsächlich der Rückseite eines elektrischen Gerätes mit einem Gehäuse,
- Figur 2: eine Aufsicht auf die Rückseite des elektrischen Gerätes mit einer Schnittlinie SIM-SIM,
- Figur 3: eine Schnittdarstellung des elektrischen Gerätes entlang der Schnittlinie SIM-SIM und
- Figur 4: eine vergrößerte Darstellung eines Ausschnitts der Schnittdarstellung entlang der Schnittlinie SIM-SIM.

### Beschreibung des Ausführungsbeispiels

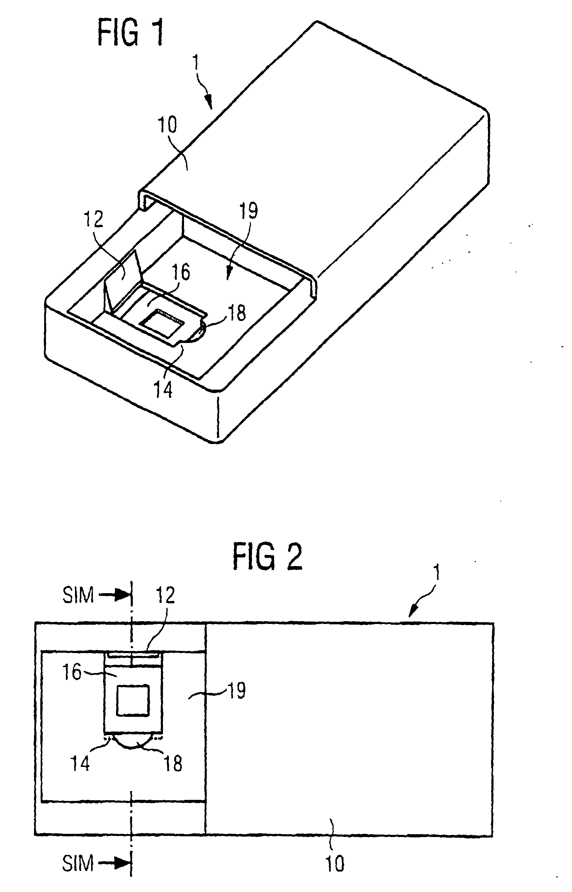

Figur 1 zeigt in perspektivischer Darstellung ein elektrisches Gerät 1 mit einem Gehäuse 10. Das elektrische Gerät 1 ist insbesondere tragbar ausgeführt, kann jedoch auch stationär betrieben werden. Weiterhin ist das elektrische Gerät 1 insbesondere als Funktelefon, beispielsweise als Mobilfunktelefon, Schnurlostelefon oder dergleichen ausgebildet. Figur 1 zeigt im wesentlichen die Rückseite des elektrischen Gerätes 1, wo sich im Ausführungsbeispiel Befestigungsmittel 12 zur Fixierung einer in Figur 1 nicht dargestellten Karte 20, ein Anschlag 14, eine Kartenaufnahme 16 und Mittel zum Lösen 18 der Karte 20 vorgesehen sind. Die Befestigungsmittel 12, der Anschlag 14, die Aufnahme 16 und die Mittel zum Lösen 18 sind im Ausführungsbeispiel insbesondere im Bereich eines Batterieoder Akkuschachts 19, beispielsweise am Boden eines Batterie- oder Akkuschachts 19 angebracht.

In Figur 2 sind sämtliche aus Figur 1 bekannten Elemente des elektrischen Gerätes 1 in einer Aufsicht dargestellt, wobei in Figur 2 weiterhin eine Schnittlinie SIM-SIM eingezeichnet ist.

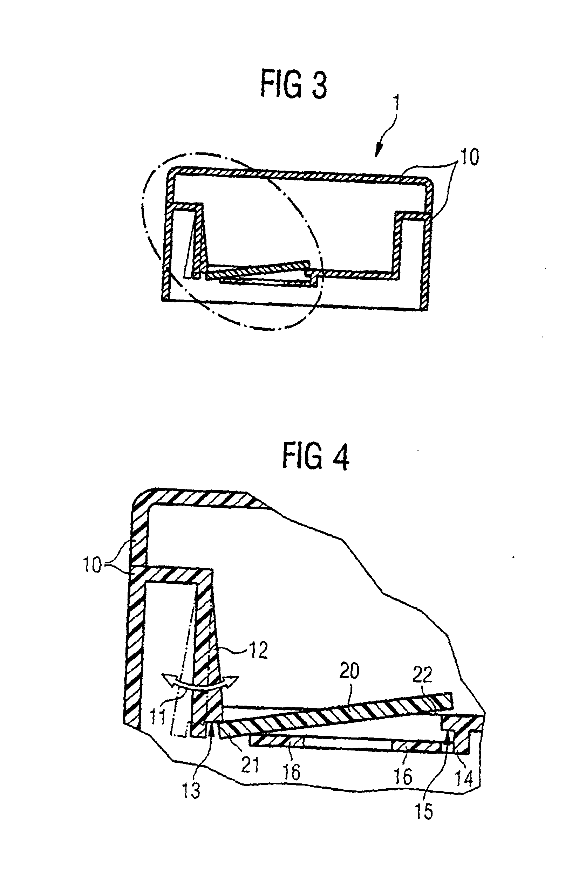

Figur 3 stellt eine Schnittdarstellung entlang der Schnittlinie SIM-SIM des elektrischen Gerätes 1 dar. Aufgrund der Größe der Darstellung ist in Figur 3 lediglich das Gehäuse 10 des elektrischen Gerätes 1 bezeichnet, wobei jedoch der erfindungswesentliche Teil der Schnittdarstellung durch Einkreisung näher bezeichnet und in Figur 4 vergrößert dargestellt ist.

Die in Figur 4 dargestellte vergrößerte Darstellung eines Teilbereichs der Schnittdarstellung entlang der Schnittlinie SIM-SIM des elektrischen Gerätes 1 umfaßt analog zu den vorangehenden Figuren das Gehäuse 10 und stellt darüber hinaus die Befestigungsmittel 12 dar, die im Ausführungsbeispiel einstückig mit dem Gehäuse 10 verbunden sind und bügelförmig in den Innenraum des Gehäuses 10 hineinragen. Im Ausführungsbeispiel sind die Befestigungsmittel 12 so geformt, daß ein nicht näher bezeichneter erster Schenkel der Befestigungsmittel 12 in den Innenraum des Gehäuses 10 hineinragt, wobei sich an den ersten Schenkel ein ebenfalls nicht näher bezeichneter zweiter Schenkel der Befestigungsmittel 12 anschließt, dessen dem ersten Schenkel abgewandtes Ende frei in den Innenraum des Gehäuses 10 hineinragt und im folgenden auch als freies Ende des zweiten Schenkels der Befestigungsmittel 12 bezeichnet wird. Der zweite Schenkel ist gegenüber dem ersten Schenkel der Befestigungsmittel 12 etwa rechtwinklig angeordnet und deutlich länger als der erste Schenkel der Befestigungsmittel 12. Damit ergibt sich für den zweiten Schenkel der Befestigungsmittel 12, daß er im Bereich der Befestigungsmittel 12 im wesentlichen parallel zur Wandung des Gehäuses 10 verläuft. Hierdurch führt der Angriff einer Kraft am freien Ende der Befestigungsmittel 12 zu einer elastischen Verformung der Befestigungsmittel 12 und somit zu einer Auslenkung insbesondere des zweiten Schenkels der Befestigungsmittel 12 in der Art, daß das freie Ende der Befestigungsmittel 12 je nach Auslenkung mehr oder weniger weit von der Wandung des Gehäuses 10 im Bereich der Befestigungsmittel 12 entfernt ist. Die bügelförmigen Befestigungsmittel 12 nehmen bei Abwesenheit einer Kraft an ihrem freien Ende eine Ruheposition ein, wobei die Auslenkmöglichkeiten der Befestigungsmittel 12 in Figur 4 durch einen Pfeil 11 dargestellt sind.

An ihrem freien Ende weisen die Befestigungsmittel 12 eine nicht näher bezeichnete Ausnehmung auf, so daß eine erste Sicherungsfläche 13 senkrecht zum Verlauf des zweiten Schenkels entsteht. Im Ausführungsbeispiel ist die Ausnehmung beispielsweise derart realisiert, daß der Querschnitt des zweiten Schenkels beginnend von seiner Verbindung mit dem ersten Schenkel zu seinem freien Ende hin sich vergrößert, wobei der Querschnitt des zweiten Schenkels der Befestigungsmittel 12 kurz vor seinem freien Ende auf der der Wandung des Gehäuses 10 abgewandten Seite abrupt verkleinert ist und so die erste Sicherungsfläche 13 entstehen läßt.

Figur 4 zeigt weiterhin die Aufnahme 16, auf der die Karte 20 in eingebautem Zustand der Karte aufliegt. Die Aufnahme 16 umfaßt insbesondere nicht dargestellte elektrische Kontakte, die mit auf der Karte 20 befindlichen und nicht dargestellten weiteren elektrischen Kontakten verbindbar sind.

Weiterhin ist in Figur 4 der Anschlag 14 dargestellt, der im Ausführungsbeispiel ebenfalls einstückig mit dem Gehäuse 10 des elektrischen Gerätes 1 verbunden ist. Der Anschlag 14 weist eine zweite Sicherungsfläche 15 auf, die sich beispielsweise durch eine weitere nicht näher bezeichnete Ausnehmung im Bereich des Anschlags 14 ergibt.

Die Befestigungsmittel 12, der Anschlag 14, die Aufnahme 16 und die Karte 20 wirken in eingebautem Zustand der Karte 20 in das elektrische Gerät, d.h. wenn die Karte 20 im elektrischen Gerät 1 fixiert ist, derart zusammen, daß die Karte 20 zum einen auf der Aufnahme 16 aufliegt und daß eine erste Seite 21 der Karte 20 so mit dem freien Ende der Befestigungsmittel 12 und insbesondere mit der ersten Sicherungsfläche 13 zusammenwirkt, daß die erste Seite 21 der Karte 20 durch die Sicherungsfläche 13 daran gehindert wird, sich von der Aufnahme 16 zu lösen, und daß zum anderen eine zweite Seite 22 der Karte 20 derart mit der Aufnahme 14 und insbesondere mit der zweiten Sicherungsfläche 15 zusammenwirkt, daß auch die zweite Seite 22 der Karte 20 durch die zweite Sicherungsfläche 15 daran gehindert wird, sich von der Aufnahme 16 zu lösen.

Sowohl beim Einbau der Karte 20 in das elektrische Gerät 1 als auch beim Ausbau der Karte 20 aus dem elektrischen Gerät 1 müssen die Befestigungsmittel 12 ausgelenkt werden.

Dies geschieht beispielsweise dadurch, daß zum Fixieren der Karte 20 im elektrischen Gerät 1 die erste Seite 21 der Karte 20 in die Ausnehmung am freien Ende der Befestigungsmittel 12 geführt wird, so daß die Karte 20 durch den Kontakt zur ersten Sicherungsfläche 13 geführt wird und daß anschließend die Karte 20 derart entgegen der Rückstellkraft der Befestigungsmittel 12 verschoben wird, daß die zweite Seite 22 der Karte 20 auf die Auflage 16 aufgelegt werden kann und durch erneutes Verschieben der Karte 20 - im wesentlichen in die Gegenrichtung - die zweite Seite 22 der Karte 20 durch die zweite Sicherungsfläche 15 von ihrem Lösen von der Aufnahme 16 gesichert werden kann.

Eine weitere Möglichkeit zur Fixierung der Karte 20 am Gehäuse 10 des elektrischen Gerätes 1 besteht darin, daß die zweite Seite 22 der Karte 20 in Kontakt mit der zweiten Sicherungsfläche 15 und zumindest teilweise in Kontakt mit der Aufnahme 16 gebracht wird, wobei jedoch die Karte 20 schräg steht und mit ihrer ersten Seite 21 etwa im mittleren Bereich des zweiten Schenkels der Befestigungsmittel 12 anliegt. Durch Druck auf die Karte 20 in Richtung auf die Aufnahme 16 hin bewirkt die erste Seite 21 der Karte 20 eine Auslenkung der Befestigungsmittel 12 so daß, wenn die Karte 20 vollständig auf der Aufnahme 16 aufliegt, die Befestigungsmittel 12 sich zumindest teilweise aus ihrer ausgelenkten Position zurückbewegen und dabei die erste Seite 21 der Karte 20 durch die erste Sicherungsfläche 13 von einem Lösen von der Aufnahme 16 gehindert wird.

Zum Lösen der Karte 20 aus dem elektrischen Gerät 10 ist erfindungsgemäß insbesondere vorgesehen, daß die Karte 20 an ihrer zweiten Seite 22 parallel zur Aufnahme 16 so weit verschoben wird, daß die zweite Sicherungsfläche 15 die zweite Seite 22 freigibt und somit ein Lösen der Karte 20 von dem Gehäuse 10 des elektrischen Gerätes 1 ermöglicht wird. Bei dieser Verschiebung der Karte 20 parallel zur Aufnahme 16 werden wiederum die Befestigungsmittel 12 ausgelenkt.

Die Befestigungsmittel 12 können bei am Gehäuse 10 des elektrischen Gerätes fixierter Karte 20 auch permanent in einer ausgelenkten Position sein, so daß bei in das Gehäuse 10 eingelegter Karte 20 ständig eine Rückstellkraft, ausgehend von den Befestigungsmitteln 12 auf die Karte 20 ausgeübt wird, die von dem Anschlag 14 aufgenommen wird.

Zum Lösen der Karte 20 aus dem Gehäuse 10 des elektrischen Gerätes 1 eignet sich besonders eine Ausnehmung 18 im Bereich des Anschlags 14, die auch als Mittel zum Lösen 18 bezeichnet wird. Durch die Ausnehmung 18 kann ein Benutzer bequem, beispielsweise mittels eines seiner Fingernägel, die Karte 20 entgegen der Rückstellkraft der Befestigungsmittel 12 derart parallel zur Aufnahme 16 verschieben, daß die zweite Seite 22 der Karte 20 von der zweiten Sicherungsfläche 15 freigegeben wird und somit lösbar ist.

Die Aufnahme 16 der Karte 20 kann erfindungsgemäß einstückig mit dem Gehäuse 10 verbunden sein oder auch in Form eines Kartenlesers zur Abstützung der Karte vorgesehen sein.

Als Karte 20 ist erfindungsgemäß insbesondere eine Identifikationskarte vorgesehen. Es sind erfindungsgemäß jedoch beispielsweise auch Speicherkarten oder kombinierte Identifikations- und Speicherkarten verwendbar. Insbesondere sind als Identifikationskarten erfindungsgemäß SIM-Karten (Subscriber Identification Module) verwendbar.

## Patentansprüche

1. Elektrisches Gerät (1) mit einem Gehäuse (10) und mit Befestigungsmitteln (12) für eine lösbare Fixierung einer Karte (20) an dem Gehäuse (10), wobei
die Befestigungsmittel (12) derart vorgesehen sind, dass eine elastische Auslenkung der Befestigungsmittel (12) aus einer Ruheposition möglich ist, und zur Fixierung der Karte am Gehäuse (10) die Befestigungsmittel (12) zumindest zeitweise aus der Ruheposition ausgelenkt werden,
wobei das elektrische Gerät (1) einen Anschlag (14) auf der den Befestigungsmitteln (12) gegenüberliegenden Seite zur Befestigung der Karte (20) umfasst, und
wobei der Anschlag (14) derart mit den Befestigungsmitteln (12) und der Karte zusammenwirkt, dass beim Fixieren der Karte durch die Befestigungsmittel (12) zumindest zeitweise eine von dem Anschlag (14) aufgenommene Kraftwirkung auf die Karte (20) ausgeübt wird,
**dadurch gekennzeichnet,**
**dass** die Befestigungsmittel (12) und der Anschlag (14) zumindest mit einem Teil des Gehäuses (10) einstückig verbunden sind,
und **dass** die Befestigungsmittel (12) derart bügelförmig ausgebildet und geformt sind, dass ein erster Schenkel in den Innenraum des Gehäuses (10) hineinragt, und dass sich an diesen ersten Schenkel ein zweiter Schenkel anschließt, dessen dem ersten Schenkel abgewandtes Ende frei in den Innenraum des Gehäuses (10) hineinragt, und
**dass** dieses freie Ende des zweiten Schenkels beim Einlegen der Karte (20) durch diese elastisch verformt und aus seiner Ruheposition ausgelenkt wird, wodurch eine Rückstellkraft bewirkt ist, mit der die Karte (20) zwischen dem zweiten ausgelenkten Schenkel und dem Anschlag (14) fixiert ist.

2. Elektrisches Gerät (1) nach Anspruch 1,
**dadurch gekennzeichnet,**
**dass** der zweite Schenkel gegenüber dem ersten Schenkel der Befestigungsmittel (12) etwa rechtwinklig angeordnet ist.

3. Elektrisches Gerät (1) nach Anspruch 1 oder 2,
**dadurch gekennzeichnet,**
**dass** der zweite Schenkel länger als der erste Schenkel der Befestigungsmittel (12) ist.

4. Elektrisches Gerät (1) nach einem der vorhergehenden Ansprüche,
**dadurch gekennzeichnet,**
**dass** der zweite Schenkel der Befestigungsmittel (12) im Wesentlichen parallel zur Wandung des Gehäuses (19) verläuft.

5. Elektrisches Gerät (1) nach einem der vorhergehenden Ansprüche,
**dadurch gekennzeichnet,**
**dass** die Befestigungsmittel (12) eine erste Sicherungsfläche (13), und dass der Anschlag (14) eine zweite Sicherungsfläche (15) umfasst, wobei die Sicherungsflächen (14, 15) die Karte (20) am Gehäuse (10) fixieren.

6. Elektrisches Gerät (1) nach einem der vorhergehenden Ansprüche,
**dadurch gekennzeichnet,**
**dass** die Befestigungsmittel (12) an ihrem freien Ende eine Ausnehmung derart aufweisen, dass eine erste Sicherungsfläche senkrecht zum Verlauf des zweiten Schenkels entsteht.

7. Elektrisches Gerät (1) nach Anspruch 6,
**dadurch gekennzeichnet,**
**dass** der Querschnitt des zweiten Schenkels beginnend von seiner Verbindung mit dem ersten Schenkel zu seinem freien Ende hin sich vergrößert.

8. Elektrisches Gerät (1) nach Anspruch 7,
**dadurch gekennzeichnet,**
**dass** der Querschnitt des zweiten Schenkels der Befestigungsmittel (12) kurz vor seinem freien Ende auf der der Wandung des Gehäuses (10) abgewandten Seite abrupt verkleinert ist, wodurch die erste Sicherungsfläche gebildet ist.

9. Elektrisches Gerät (1) nach einem der vorhergehenden Ansprüche,
**dadurch gekennzeichnet,**
**dass** die Befestigungsmittel (12) bei am Gehäuse (10) befestigter Karte (20) aus der Ruheposition ausgelenkt sind.

10. Elektrisches Gerät (1) nach einem der vorhergehenden Ansprüche,
**dadurch gekennzeichnet,**
**dass** die Befestigungsmittel (12) beim Lösen der Fixierung der Karte (20) zumindest zeitweise aus ihrer Position bei am Gehäuse (10) fixierter Karte (20) ausgelenkt sind.

11. Elektrisches Gerät (1) nach Anspruch 10,
**dadurch gekennzeichnet,**
**dass** im Bereich des Anschlags (14) Mittel (18) zum Lösen der Karte (20) vorgesehen sind, wobei die Mittel (18), zum Lösen der Karte (20) geeignet sind, durch eine Verschiebung der Karte (20) eine Auslenkung der Befestigungsmittel (12) und eine Aufhebung der Fixierung der Karte (20) bezüglich der zweiten Sicherungsfläche (15) zu bewirken.

12. Elektrisches Gerät (1) nach Anspruch 11,
**dadurch gekennzeichnet,**
**dass** die Mittel (18) zum Lösen in Form einer Ausnehmung im Bereich des Anschlags (14) vorgesehen sind.

13. Elektrisches Gerät (1) nach einem der vorhergehenden Ansprüche,
**dadurch gekennzeichnet,**
**dass** die Karte (20) eine Identifikationskarte, insbesondere eine SIM-Subscriber Identification Module-Karte, ist.

14. Elektrisches Gerät (1) nach einem der vorhergehenden Ansprüche,
**dadurch gekennzeichnet,**
**dass** im Gehäuse (10) eine Aufnahme (16) vorgesehen ist, auf der die Karte (20) in eingebautem Zustand aufliegt.

15. Elektrisches Gerät (1) nach Anspruch 14,
**dadurch gekennzeichnet,**
**dass** die Aufnahme (16) elektrische Kontakte aufweist, die mit elektrischen Kontakten der Karte (20) verbindbar sind.

16. Elektrisches Gerät (1) nach Anspruch 14 oder 15,
**dadurch gekennzeichnet,**
**dass** die Aufnahme (16) einstückig mit dem Gehäuse (10) verbunden oder in Form eines Kartenlesers zur Abstützung der Karte (20) vorgesehen ist.

17. Elektrisches Gerät (1) nach einem der vorhergehenden Ansprüche,
**dadurch gekennzeichnet,**
**dass** dieses als Mobilfunktelefon oder Schnurlostelefon ausgebildet ist.

## Claims

1. Electrical device (1) comprising a housing (10) and comprising fixing means (12) for a detachable fixing of a card (20) to the housing (10),
the fixing means (12) being provided in such a way that an elastic deflection of the fixing means (12) from an inactive position is possible, and the fixing means (12) being deflected at least temporarily from the inactive position in order to fix the card to the housing (10),
the electrical device (1) comprising a stop (14) on the side opposite the fixing means (12) to fix the card (20), and
the stop (14) interacting with the fixing means (12) and the card in such a way that when the card is being fixed by the fixing means (12), the action of a force accommodated by the stop (14) is at least temporarily exerted on the card (20),
**characterized in that** the fixing means (12) and the stop (14) are connected in one piece at least to part of the housing (10),
and **in that** the fixing means (12) are designed and formed in a bracket shape in such a way that a first leg projects into the interior of the housing (10) and that a second leg adjoins this first leg and its end facing away from the first leg projects freely into the interior of the housing (10), and
**in that** during the insertion of the card (20), this free end of the second leg is deformed elastically by said card and deflected out of its inactive position, which effects a restoring force with which the card (20) is fixed between the second deflected leg and the stop (14).

2. Electrical device (1) according to Claim 1, **characterized in that** the second leg is arranged approximately at right angles with respect to the first leg of the fixing means (12).

3. Electrical device (1) according to Claim 1 or 2, **characterized in that** the second leg is longer than the first leg of the fixing means (12).

4. Electrical device (1) according to one of the preceding claims, **characterized in that** the second leg of the fixing means (12) runs substantially parallel to the wall of the housing (19).

5. Electrical device (1) according to one of the preceding claims, **characterized in that** the fixing means (12) comprises a first securing face (13) and **in that** the stop (14) comprises a second securing face (15), the securing faces (14, 15) fixing the card (20) to the housing (10).

6. Electrical device (1) according to one of the preceding claims, **characterized in that** the fixing means (12) have a recess at their free end in such a way that a first securing face is produced at right angles to the course of the second leg.

7. Electrical device (1) according to Claim 6, **characterized in that** the cross section of the second leg, beginning from its connection to the first leg, increases in size toward its free end.

8. Electrical device (1) according to Claim 7, **characterized in that** the cross section of the second leg of the fixing means (12) is reduced in size abruptly, shortly before its free end, to that of the side facing away from the wall of the housing (10), which forms the first securing face.

9. Electrical device (1) according to one of the preceding claims, **characterized in that** the fixing means (12) are deflected from the inactive position when the card (20) is fixed to the housing (10).

10. Electrical device (1) according to one of the preceding claims, **characterized in that** during the detachment of the fixing of the card (20), the fixing means (12) are deflected at least temporarily from their position with the card (20) fixed to the housing (10).

11. Electrical device (1) according to Claim 10, **characterized in that** in the region of the stop (14), means (18) for detaching the card (20) are provided, the means (18) for detaching the card (20) being suitable, as a result of displacement of the card (20), to effect a deflection of the fixing means (12) and cancellation of the fixing of the card (20) with respect to the second securing face (15).

12. Electrical device (1) according to Claim 11, **characterized in that** the detachment means (18) are provided in the form of a recess in the region of the stop (14).

13. Electrical device (1) according to one of the preceding claims, **characterized in that** the card (20) is an identification card, in particular a SIM (subscriber identification module) card.

14. Electrical device (1) according to one of the preceding claims, **characterized in that** a recess (16) is provided in the housing (10), on which recess the card (20) rests in the installed state.

15. Electrical device (1) according to Claim 14, **characterized in that** the holder (16) has electrical contacts which can be connected to electrical contacts of the card (20).

16. Electrical device (1) according to Claim 14 or 15, **characterized in that** the holder (16) is connected in one piece to the housing (10) or is provided in the form of a card reader to support the card (20).

17. Electrical device (1) according to one of the preceding claims, **characterized in that** this is designed as a mobile radio telephone or cordless telephone.

## Revendications

1. Appareil électrique (1) doté d'un boîtier (10) et de moyens de fixation (12) permettant une fixation libérable d'une carte (20) sur le boîtier (10), dans lequel
les moyens de fixation (12) sont prévus de manière à permettre une déviation élastique des moyens de fixation (12) hors d'une position de repos, les moyens de fixation (12) étant déviés au moins momentanément hors de leur position de repos pour fixer la carte sur le boîtier (10),
l'appareil électrique (1) comprenant une butée (14) sur le côté opposé aux moyens de fixation (12), pour la fixation de la carte (20), et
la butée (14) coopérant avec les moyens de fixation (12) et la carte de telle sorte que lorsque la carte est fixée par les moyens de fixation (12), une force qui est au moins momentanément reprise par la butée (14) est exercée sur la carte (20),
**caractérisé en ce que**
les moyens de fixation (12) et la butée (14) sont reliés d'un seul tenant à au moins une partie du boîtier (10),
**en ce que** les moyens de fixation (12) sont configurés et formés en forme d'étrier de telle sorte qu'une première aile pénètre dans l'espace intérieur du boîtier (10) et qu'une deuxième aile dont l'extrémité non tournée vers la première aile déborde librement dans l'espace intérieur du boîtier (10) se raccorde à cette première aile, et
**en ce que** lors de l'insertion de la carte (20), cette extrémité libre de la deuxième aile est déformée élastiquement par la carte est déviée hors de sa position de repos, ce qui exerce une force de rappel par laquelle la carte (20) est immobilisée entre la deuxième aile déviée et la butée (14).

2. Appareil électrique (1) selon la revendication 1, **caractérisé en ce que** la deuxième aile est disposée sensiblement à angle droit par rapport à la première aile des moyens de fixation (12).

3. Appareil électrique (1) selon la revendication 1 ou 2, **caractérisé en ce que** la deuxième aile est plus longue que la première aile des moyens de fixation (12).

4. Appareil électrique (1) selon l'une des revendications précédentes, **caractérisé en ce que** la deuxième aile des moyens de fixation (12) s'étend essentiellement en parallèle à la paroi du boîtier (19).

5. Appareil électrique (1) selon l'une des revendications précédentes, **caractérisé en ce que** les moyens de fixation (12) comprennent une première surface de fixation (13) et **en ce que** la butée (14) comprend une deuxième surface de fixation (15), les surfaces de fixation (14, 15) immobilisant la carte (20) sur le boîtier (10).

6. Appareil électrique (1) selon l'une des revendications précédentes, **caractérisé en ce que** les moyens de fixation (12) présentent à leur extrémité libre une découpe qui permet à la première surface de fixation de s'étendre perpendiculairement à la deuxième aile.

7. Appareil électrique (1) selon la revendication 6, **caractérisé en ce que** la section de la deuxième aile augmente vers son extrémité libre à partir de sa liaison avec la première aile.

8. Appareil électrique (1) selon la revendication 7, **caractérisé en ce que** la section de la deuxième aile des moyens de fixation se rétrécit brusquement peu avant son extrémité libre sur son côté non tourné vers la paroi du boîtier (10), ce qui forme la première surface de fixation.

9. Appareil électrique (1) selon l'une des revendications précédentes, **caractérisé en ce que** lorsque la carte (20) est fixée sur le boîtier (10), les moyens de fixation (12) sont déviés hors de leur position de repos.

10. Appareil électrique (1) selon l'une des revendications précédentes, **caractérisé en ce que** lors de la libération de la fixation de la carte (20), les moyens de fixation (12) sont déviés au moins momentanément hors de leur position par la carte (20) fixée sur le boîtier (10).

11. Appareil électrique (1) selon la revendication 10, **caractérisé en ce que** dans la région de la butée (14) sont prévus des moyens (18) de libération de la carte (20), les moyens (18) de libération de la carte (20) convenant pour exercer lors d'un déplacement de la carte (20) une déviation des moyens de fixation (12) et une suppression de la fixation de la carte (20) sur la deuxième surface de fixation (15).

12. Appareil électrique (1) selon la revendication 11, **caractérisé en ce que** les moyens (18) de libération sont prévus sous la forme d'une découpe ménagée dans la région de la butée (14).

13. Appareil électrique (1) selon l'une des revendications précédentes, **caractérisé en ce que** la carte (20) est une carte d'identification, et en particulier une carte de module d'identification d'abonné ("SIM - Subscriber Identification Module").

14. Appareil électrique (1) selon l'une des revendications précédentes, **caractérisé en ce qu'**un logement (16) sur lequel la carte (20) repose lorsqu'elle a été placée, est prévu dans le boîtier (10).

15. Appareil électrique (1) selon la revendication 14, **caractérisé en ce que** le logement (16) présente des contacts électriques qui peuvent être reliés à des contacts électriques de la carte (20).

16. Appareil électrique (1) selon la revendication 14 ou 15, **caractérisé en ce que** le logement (16) est relié d'un seul tenant au boîtier (10) ou est prévu sous la forme d'un lecteur de carte, pour soutenir la carte (20).

17. Appareil électrique (1) selon l'une des revendications précédentes, **caractérisé en ce qu'**il est configuré comme radiotéléphone mobile ou comme téléphone sans fil.
